# EUROPEAN PATENT SPECIFICATION

(11) **EP 1 723 004 B1**
(45) Date of publication and mention of the grant of the patent: **04.08.2010**
(21) Application number: 05725267.8
(22) Date of filing: 10.03.2005
(51) Int. Cl.: B60R 9/04

(54) **INJECTION MOLDED ROOF RAIL**
SPRITZGEGOSSENE DACHSCHIENE
GALERIE MOULEE PAR INJECTION

(30) Priority: 10.03.2004 US 551980 P
(43) Date of publication of application: 22.11.2006
(73) Proprietor: Decoma International Inc., Concord, Ontario L4K 4J5 (CA)
(72) Inventor: CLINTON, Paul, J., Chesterfield, MI 48051 (US); DROUILLARD, James, R., Lake Orion, MI 48362 (US); STAPLETON, Craig, St. Clair, MI 48079 (US); ARMSTRONG, Bradford, D., Barrie, Ontario L4N 1PN (CA); MCLEOD, Martin, R., Barrie, Ontario L4N 7A3 (CA); HUOTARI, Keijo, J., Fenton, MI 48430 (US); SCHREMPF, Rudolf, Allan, Brampton, Ontario L6R 1S1 (CA); HENDERSON, Jack, V., West Bloomfield, MI 48322 (US); GRGAC, Steven, Mississauga, Ontario L5R 1B8 (CA)
(74) Representative: Hössle, Markus
(86) International application number: PCT/US2005/008004
(87) International publication number: WO 2005/087545

(56) References cited:
- US-A- 5 320 264
- PATENT ABSTRACTS OF JAPAN vol. 1997, no. 08, 29 August 1997 (1997-08-29) -& JP 09 109783 A (INOAC CORP), 28 April 1997 (1997-04-28)
- PATENT ABSTRACTS OF JAPAN vol. 1998, no. 10, 31 August 1998 (1998-08-31) -& JP 10 129359 A (DAIKYO INC), 19 May 1998 (1998-05-19)
- PATENT ABSTRACTS OF JAPAN vol. 1997, no. 11, 28 November 1997 (1997-11-28) -& JP 09 175280 A (INOAC CORP), 8 July 1997 (1997-07-08)

## Description

### Field of the Invention

The invention relates to a roof rail for a motor vehicle. More particularly, the invention relates to an injection molded roof rail for a motor vehicle.

### Description of Related Art

Many motor vehicles include a roof rack assembly fixedly mounted along a motor vehicle roof for storing and transporting articles. The roof rack assembly includes a pair of spaced apart roof rails extending along respective sides of the roof. At least one support structure is fixedly mounted to the roof to support each roof rail thereabove. Such support structures are typically located at each end of the roof rail. A molded end cap is often secured to each support structure to provide a seamless appearance at each end of the roof rail.

Typically, roof rails are aluminum or steel extrusions. Such metal roof rails have, however, certain disadvantages. Most notably, the metal extrusions have a constant cross-section, which imposes significant limitations on the aesthetic design of the roof rails. In addition, metal roof rails add to the weight of the motor vehicle such that the center of gravity thereof is raised. As a result, the stability and cornering capabilities of the motor vehicle are decreased. Moreover, the metal roof rails are expensive to assemble and install, and require protective finishes to prevent corrosion.

As an alternative to metal roof rails, roof rails molded from a thermoplastic material have been developed. The molded roof rails result in a decrease in weight of the motor vehicle. In addition, a more flexible, aesthetic design can be created than that which would be available from metal extrusions. Further, assembly costs are also reduced since the roof rail is molded as a single piece.

United States Patent 5,765,737 to Cucheran et al. is directed to a vehicle article carrier including a pair of integrally formed side rail members. Each one-piece side rail member includes an elongated side rail portion having terminal end portions. An end support is integrally formed with each side rail portion at the terminal end portions thereof. Each end support includes a bottom portion including at least one aperture for receiving fasteners to secure the side rail member to an outer body surface of a vehicle. A hollow area extends along the entire length of each side rail portion, and a channel extends along substantially the entire length of each side rail portion. The one-piece side rail members are formed in accordance with conventional gas assisted injection molding techniques. Gas assisted injection molding is, however, a relatively expensive process, so much so that a majority of the savings in cost obtained by molding a roof rail versus assembling a roof rail from a metal extrusion is lost. Further, gas assisted injection molding produces only hollow rails, which requires a secondary cutting operation to form a desired open channel. Another device is disclosed in JP-A-09 175280. This document shows a molded roof rail structure with the technical features of the preamble of claim 1.

The thermoplastic material in the molded roof rails is often reinforced with glass fibers to provide structural rigidity to the roof rail. For example, United States Patent Application No. 2002/0011506 to Shingu et al. is directed to a vehicle roof rail including a rail portion, which may be solid or hollow, and leg portions. The rail and leg portions are integrally molded by injection molding. The roof rail is formed of a resin composition containing a polyamide resin and glass fibers.

### Summary of the Invention

According to one aspect of the invention, a roof rail for a motor vehicle roof includes an elongated main body portion having an open channel extending between opposing first and second ends. An end portion is integrally formed with the main body portion at each of the first and second ends thereof for attaching the roof rail to the motor vehicle roof.

### Brief Description of the Drawings

Advantages of the present invention will be readily appreciated as the same becomes better understood by reference to the following detailed description when considered in connection with the accompanying drawings wherein:

Figure 1 is a perspective view of a motor vehicle including a roof rail according to the invention fixedly mounted along a motor vehicle roof;

Figure 2 is a partially exploded, perspective view of the roof rail including a main body portion and a pair of end portions integrally formed therewith;

Figure 3 is a fragmentary, perspective view of the roof rail including an end cap secured to one of the pair of end portions;

Figure 4 is a fragmentary, perspective view of the roof rail including at least one S clip for securing the end cap to one of the pair of end portions;

Figure 5 is a fragmentary, perspective view of the main body portion including a middle mounting structure for attachment thereto; and

Figures 6A-6F are fragmentary, perspective views of the roof rail wherein the end caps are integrally formed with the respective end portions.

### Detailed Description of the Preferred Embodiment

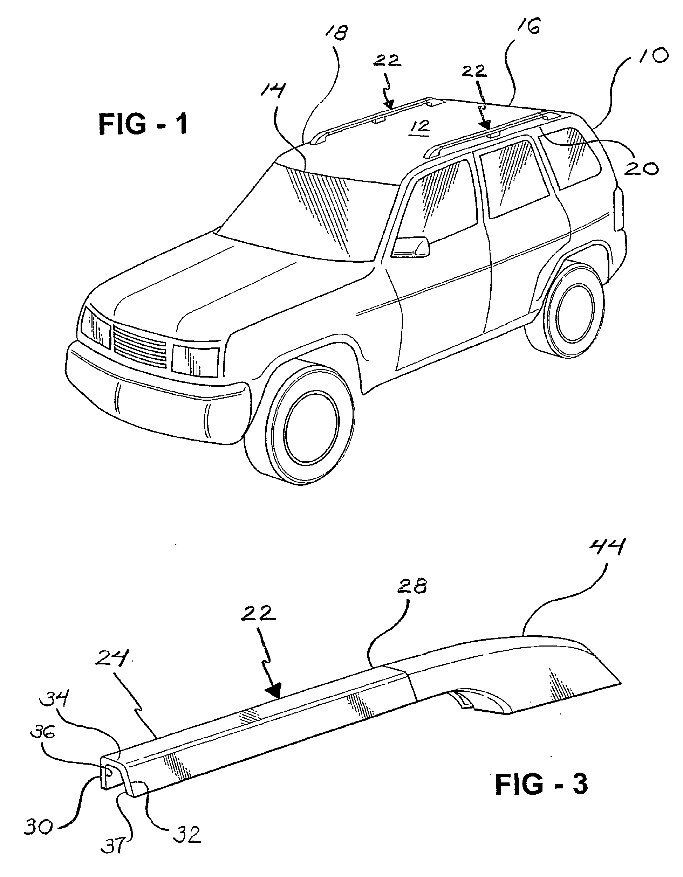

Referring to Figure 1, a motor vehicle 10 includes a roof 12 having a front edge 14, a rear edge 16, and a pair of sides 18, 20 extending between the front 14 and rear 16 edges. A roof rail, generally indicated at 22, is fixedly mounted along each side 18, 20 of the roof 12. Each roof rail 22 extends between the front edge 14 and the rear edge 16 of the roof 12. It is contemplated that although a roof rail is shown and described herein, the same rail may be fixedly mounted at various locations along the motor vehicle 10.

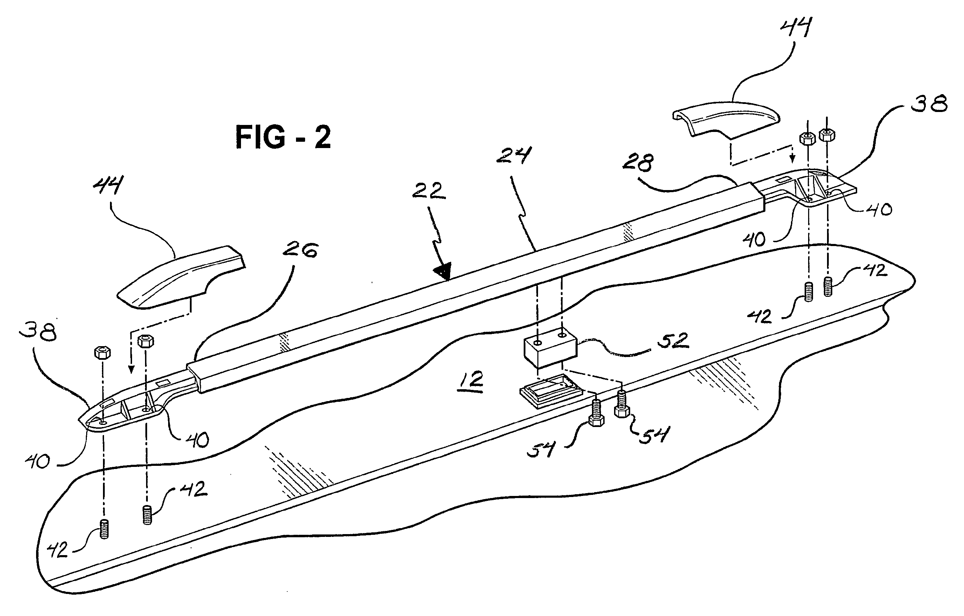

Referring to Figures 2 and 3, the roof rail 22 includes an elongated main body portion 24 having an open channel 36 extending between opposing first 26 and second 28 ends. More specifically, the main body portion 24 is generally C-shaped, as shown in Figure 3, including a pair of outer walls 30, 32 and a connecting wall 34 extending therebetween. The pair of outer walls 30, 32 and the connecting wall 34 define the open channel 36. The open channel 36 includes an opening 37.

An end portion 38 of the roof rail 22 is integrally formed with the main body portion 24 adjacent each of the first 26 and second 28 ends. The end portion 38 includes a plurality of mounting apertures 40. A plurality of fasteners 42 extends through the respective plurality of mounting apertures 40 to fixedly mount the end portions 38 along the roof 12.

The roof rail 22 if preferably molded in a generally conventional mold for injection-compression molding, as is well-known to those skilled in the art. The main body portion 24 and the end portion 38 are preferably formed from long glass fiber-reinforced organic resin material, preferably a thermoplastic material. Preferably, the organic resin material is polypropylene reinforced with approximately 20% to 40% by weight long glass fibers. Most preferably, the polypropylene is reinforced with approximately 40% by weight long glass fibers. It is, however, appreciated that the particular percentage by weight of long glass fibers utilized to reinforce the polypropylene may vary. The long glass fibers, prior to an extrusion step, have an average length of approximately 12mm. In the formed roof rail 22, the long glass fibers have an average length of approximately 4-50mm. The formed roof rail 22 has a flexibility modulus of 798,00psi min. As is well-known in the art, the organic resin material can include UV stabilizers and color pigments for desired characteristics such as UV resistance and color matching, respectively.

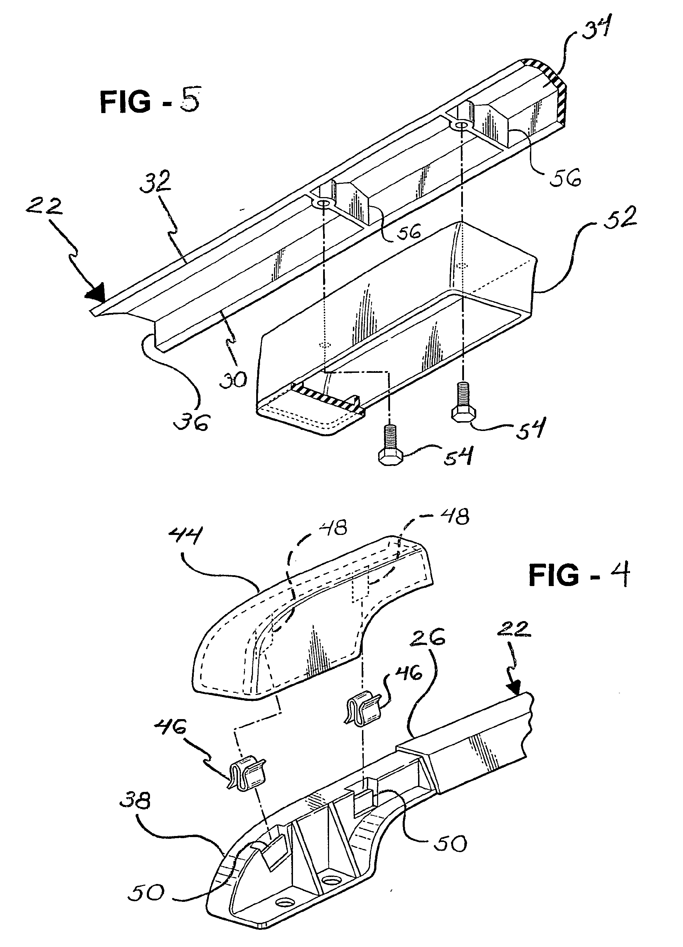

An end cap 44 is fixedly secured to each end portion 38 to provide the roof rail 22 with an aesthetically pleasing exterior appearance. Referring to Figure 4, an "S" clip 46 is utilized to secure the end caps 44 to each end portion 38. The "S" clip 46 engages a tab 48 integrally formed with the end cap 44, and a channel wall 50 integrally formed with the end portion 38. Although the attachment of the end cap 44 to the end portion 38 has been shown and described as utilizing the "S" clip 46, it is appreciated that the end cap 44 may be secured to the end portion 38 in numerous ways including, but not limited to, additional interference or "snap" closures and adhesives.

Referring to Figure 5, a mid-mount 52 may be fixedly secured to the main body portion 24 by fasteners 54. The mid-mount 52, which is disposed within the open channel 36, prevents deformation of the main body portion 24 as a result of loads applied thereto. The mid-mount 52 may be located at any of various locations along the main body portion 24 between the first 26 and second 28 ends thereof. It is contemplated that the mid-mount 52 may be welded or bonded to the roof rail 22 utilizing conventional methods of attachment such as vibration or sonic welding. In the alternative, it is contemplated that the mid-mount 52 may be integrally molded with the main body portion 24.

At least one reinforcement structure 56 may be integrally formed with the main body portion 24 to receive fasteners, accessories, or other hardware secured to the roof rail 22. The reinforcement structure 56, which is typically a web or pad of material, can be formed to receive bolts, self-tapping screws, or other mounting hardware.

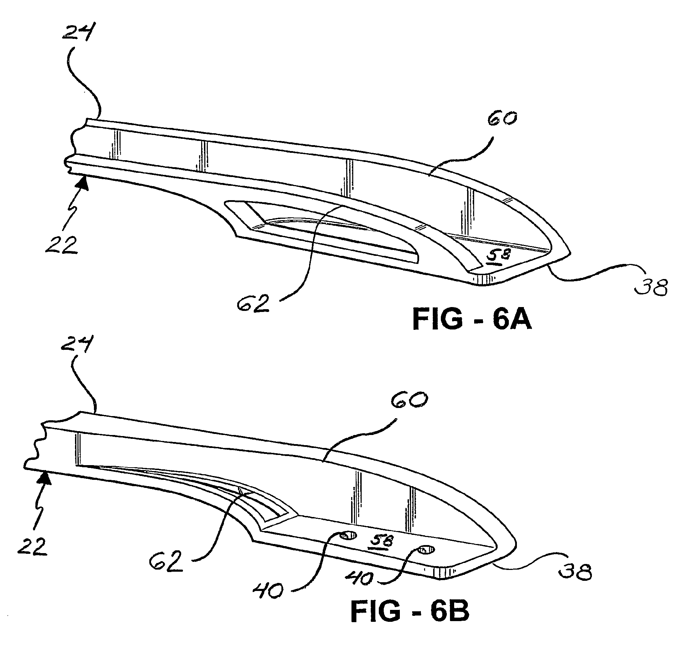

Referring to Figures 6A-6F, in an alternative embodiment of the invention, the end caps 44 are integrally formed with the main body portion 24 at each end portion 38 of the roof rail 22. Each end portion 38 includes a bottom wall 58 having the plurality of mounting apertures 40. An outboard wall 60 extends upwardly from the bottom wall 58. The outboard wall 60 provides the end portion 38 of the roof rail 22 with an aesthetically pleasing exterior appearance.

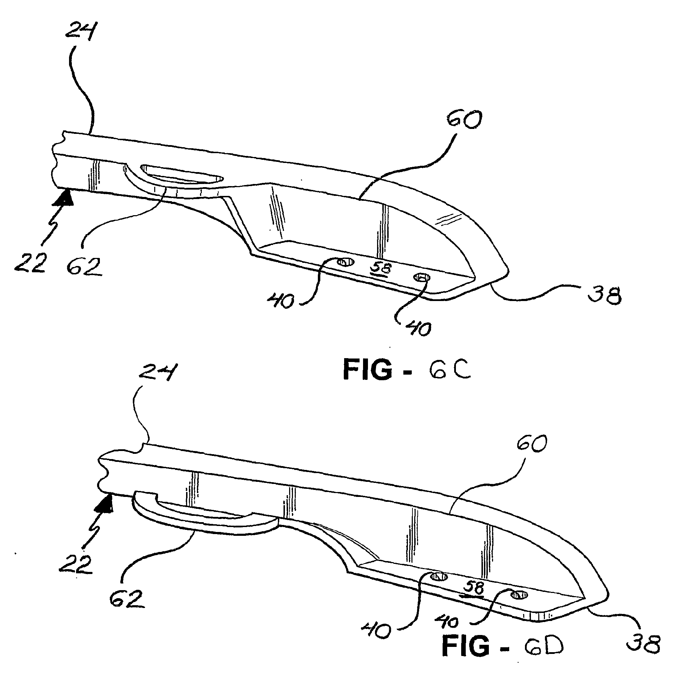

A loop structure 62 may be integrally formed along the main body portion 24 or at the end portion 38, as shown in Figures 6A-6D, to serve as a tie down point for securing articles to the roof rail 22. The loop structure 62 may extend out from the bottom wall 58, as shown in Figures 6A and 6B, or the outboard wall 60, as shown in Figures 6C and 6D.

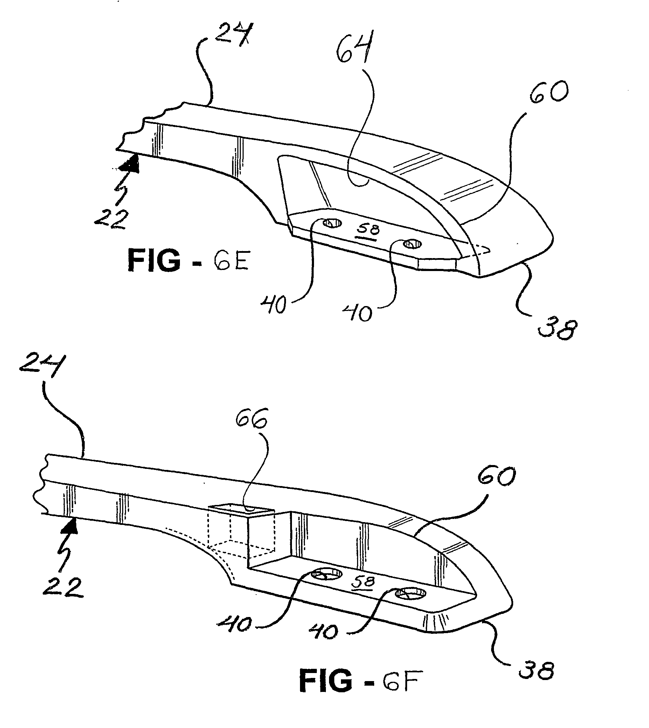

In another alternative, the outboard wall 60 may be contoured to at least partially cover the bottom wall 58, as shown in Figure 6E. An opening 64 is, however, provided for permitting access to the plurality of mounting apertures 40.

Finally, a cavity 66, shown in Figure 6F, may be formed in the end portion 38 adjacent to at least one of the first 26 and second 28 ends of the main body portion 24. The cavity 64 may serve as a tie down point or receive one of numerous accessories, such as a light housing or an arm of a cargo rack, to be mounted on top of the motor vehicle 10.

The main body portion 24 and the end portions 38 need not have a constant cross-section or size, which allows the production of roof rails 22 with a variety of aesthetics and/or functional features. Further, by employing injection molding technology, numerous structural features, such as the open channel 36, the reinforcement structure 56, and the loop structure 62, can be provided. Further, inserts such as metal mounting components and electrical wiring for accessories can be molded into the roof rail 22 by loading these elements into a mold prior to injecting a melt to form the roof rail 22.

The invention has been described in an illustrative manner. It is to be understood that the terminology, which has been used, is intended to be in the nature of words of description rather than of limitation. Many modifications and variations of the invention are possible in light of the above teachings. Therefore, within the scope of the appended claims, the invention may be practiced other than as specifically described.

## Claims

1. A roof rail (22) for a motor vehicle roof (12), said roof rail (22) comprising:
an elongated main body portion (24) extending between opposing first (26) and second (28) ends;
an end portion (30) at each of said first (26) and second ends (28) of said main body portion (24) for attaching said roof rail (22) to the motor vehicle roof (12); and
wherein each of said end portions (30) includes a bottom wall (58) abutting the motor vehicle roof (12) when said roof rail (22) is secured thereto, and including a plurality of roof mounting apertures (40);
**characterized in that**
said end portions (39) are integrally formed with said main body portion (24); and
a loop structure (62) is integrally formed with said main body portion (24) for providing a tie down point in order to secure articles to said roof rail (22);
wherein each of said end portions (30) includes an outboard wall (60) connected to said bottom wall (58) for supporting said loop structure (62).

2. A roof rail (22) as set forth in claim 1, wherein said outboard wall (60) is contoured to at least partially cover said bottom wall (58), wherein an opening (64) is provided for permitting access to said plurality of mounting apertures (40).

## Patentansprüche

1. Dachreling (22) für ein Kraftfahrzeugdach (12), wobei die Dachreling (22) folgendes umfasst:
einen langgestreckten Hauptkörperabschnitt (24), der sich zwischen einem ersten Ende (26) und einem gegenüberliegenden zweiten Ende (28) erstreckt,
einen Endabschnitt (30) sowohl an dem ersten Ende (26) als auch an dem zweiten Ende (28) des Hauptkörperabschnitts (24), um die Dachreling (22) an dem Kraftfahrzeugdach (12) zu befestigen, und
wobei jeder der Endabschnitte (30) eine Bodenwand (58) aufweist, die auf dem Kraftfahrzeugdach (12) anliegt, wenn die Dachreling (22) daran befestigt ist, und mehrere Dachmontagelöcher (40) aufweist,
**dadurch gekennzeichnet, dass**
die Endabschnitte (39) mit dem Hauptkörperabschnitt (24) einteilig ausgebildet sind und
eine Schlaufenstruktur (62) einteilig mit dem Hauptkörperabschnitt (24) ausgebildet ist, um einen Festzurrpunkt zu schaffen, um Gegenstände an der Dachreling (22) zu befestigen,
wobei jeder der Endabschnitte (30) eine Außenwand (60) aufweist, die mit der Bodenwand (58) verbunden ist, um die Schlaufenstruktur (62) zu stützen.

2. Dachreling (22) nach Anspruch 1, wobei die Außenwand (60) einen Umriss aufweist, um die Bodenwand (58) wenigstens teilweise abzudecken, wobei eine Öffnung (64) vorgesehen ist, um einen Zugang zu den mehreren Montagelöchern (40) zuzulassen.

## Revendications

1. Barre de toiture (22) pour une toiture (12) d'un véhicule automobile, ladite barre de toiture (22) comprenant :
une portion de corps principal allongé (24) s'étendant entre une première extrémité (26) et une seconde extrémité (28) opposées ;
une portion terminale (30) à chacune de ladite première extrémité (26) et ladite seconde extrémité (28) de ladite portion de corps principal (24) pour attacher ladite barre de toiture (22) à la toiture (12) du véhicule automobile ; et
dans laquelle chacune desdites portions terminales (30) inclut une paroi inférieure (58) en butée contre la toiture (12) du véhicule automobile quand ladite barre de toiture (22) est attachée à celle-ci, et incluant une pluralité d'ouvertures de montage de toiture (40) ;
**caractérisée en ce que**
lesdites portions terminales (39) sont formées intégralement avec ladite portion de corps principal (24); et
une structure en boucle (62) est formée intégralement avec ladite portion de corps principal (24) pour constituer un point d'attache vers le bas afin de fixer des articles sur ladite barre de toiture (22) ;
dans laquelle chacune desdites portions terminales (30) inclut une paroi extérieure (60) reliée à ladite paroi inférieure (58) pour supporter ladite structure en boucle (62).

2. Barre de toiture (22) selon la revendication 1, dans laquelle ladite paroi extérieure (60) est conformée pour couvrir au moins partiellement ladite paroi inférieure (58), et dans laquelle une ouverture (64) est ménagée pour permettre l'accès à ladite pluralité d'ouvertures de montage (40).
